# EUROPÄISCHE PATENTSCHRIFT

(11) **EP 1 704 338 B1**
(45) Veröffentlichungstag und Bekanntmachung des Hinweises auf die Patenterteilung: **20.01.2010**
(21) Anmeldenummer: 04802008.5
(22) Anmeldetag: 17.12.2004
(51) Int. Cl.: F16C 33/12

(54) **GLEITLAGER MIT VERSCHLEISSANZEIGE**
PLAIN BEARING HAVING A WEAR INDICATOR
PALIER DE GLISSEMENT A INDICATEUR D'USURE

(30) Priorität: 17.12.2003 AT 20322003
(43) Veröffentlichungstag der Anmeldung: 27.09.2006
(73) Patentinhaber: Miba Gleitlager GmbH, 4663 Laakirchen (AT)
(72) Erfinder: AUFISCHER, Rainer, A-4664 Oberweis (AT); LANG, Hubert, A-4332 Au an der Donau (AT)
(74) Vertreter: Hübscher, Helmut
(86) Internationale Anmeldenummer: PCT/AT2004/000446
(87) Internationale Veröffentlichungsnummer: WO 2005/059385

(56) Entgegenhaltungen:
- DE-A1- 2 132 360
- DE-A1- 10 200 325
- DE-A1- 19 814 756
- DE-C- 741 087
- PATENT ABSTRACTS OF JAPAN Bd. 016, Nr. 290 (M-1272), 26. Juni 1992 (1992-06-26) & JP 04 078319 A (TAIHO KOGYO CO LTD), 12. März 1992 (1992-03-12) in der Anmeldung erwähnt

## Beschreibung

### Technisches Gebiet

Die Erfindung bezieht sich auf ein Gleitlager mit einer Stützschale und einer auf der Stützschale aufgebrachten Gleitschicht aus einem Lagermetall.

### Stand der Technik

Bei Zweistofflagern, die aus einer Stützschale und einer auf der Stützschale aufgebrachten Gleitschicht aus einem Lagermetall, beispielsweise einer Aluminium-Zinn-Legierung, bestehen, wird die Standzeit durch die Dauerfestigkeit des Lagermetalls der Gleitschicht bestimmt, die ja einer Biegewechselbelastung ausgesetzt ist. Ein solches Gleitlager sollte daher vor dem Auftreten eines Lagermetallbruches ausgewechselt werden. Da die verbleibende Standzeit jedoch nicht am Gleitlager selbst erfaßt werden kann, ergeben sich in der Praxis bei der Bestimmung der restlichen Standzeit erhebliche Probleme, zumal die Standzeit nicht nur von der Einsatzzeit, sondern auch von der Belastung des jeweiligen Gleitlagers abhängt.

Um insbesondere bei Großmotoren Lagerbeschädigungen durch einen anfänglichen Trockenlauf zu vermeiden, ist es bekannt (DE 198 14 756 A1), die aus einem Lagermetall gebildete, auf einer Stützschale aufgebrachte Gleitschicht mit einer dünnen, gute Trockenlaufeigenschaften aufweisenden Schutzschicht zu versehen, die eine Verschleißschicht darstellt, wobei die Anordnung so getroffen ist, dass die Schutzschicht während des Einlaufvorgangs verschleißt, sodass nach dem Verschleiß der Schutzschicht übliche Lagerbedingungen vorliegen. Eine Abschätzung der Standzeit eines solchen Lagers ist nicht möglich.

### Darstellung der Erfindung

Der Erfindung liegt somit die Aufgabe zugrunde, ein Gleitlager der eingangs geschilderten Art so auszugestalten, daß am Lager selbst ein notwendiger Lagerwechsel wegen der Gefahr eines Lagermetallbruches erkannt werden kann.

Die Erfindung löst die gestellte Aufgabe dadurch, daß die Gleitschicht eine eine Laufschicht bildende Deckschicht trägt, deren Dicke dem während der durchschnittlichen Standzeit der Gleitschicht zu erwartenden Verschleiß der Deckschicht entspricht.

Der Erfindung liegt die Erkenntnis zugrunde, daß der Verschleiß einer eine Laufschicht für das Gleitlager bildenden Deckschicht sowohl von der Einsatzzeit des Lagers als auch von seiner Belastung abhängt, so daß für eine vorgegebene, durchschnittliche Lagerbelastung und eine auf diese durchschnittliche Lagerbelastung abgestellte übliche Standzeit des Lagers der Abtrag der Deckschicht bestimmt werden kann. Wird daher eine Deckschicht, die sich von der Gleitschicht unterscheidet, in einer Dicke aufgetragen, die dem während der durchschnittlichen Standzeit der Gleitschicht zu erwartenden Verschleiß der Deckschicht entspricht, so kann ein anstehender Lagerwechsel am Verschleiß der Deckschicht erkannt werden. Besonders einfache Bedingungen hinsichtlich der Feststellung eines notwendigen Lagerwechsels ergeben sich, wenn sich die die Laufschicht bildende Deckschicht optisch von der Gleitschicht unterscheidet, weil in diesem Fall die Notwendigkeit eines Lagerwechsels durch ein bloßes In-Augenschein-nehmen des Lagers daran erkannt werden kann, daß sich die Farbe der Lauffläche nach dem Verschleiß der Laufschicht ändert. Es ist zwar bei Gleitlagern mit einer Gleitschicht aus einem Lagermetall auf Aluminiumbasis bereits bekannt (JP 4 078 319 A), auf die Gleitschicht mehrere Schichten aus einem unterschiedlich eingefärbten Polyimid aufzubringen, um aufgrund des sich nach dem Einlaufen des Lagers über die Lauffläche ergebenden Farbmusters die örtlich unterschiedlichen Lagerbeanspruchungen beurteilen zu können, doch läßt die optische Erkennung der örtlich unterschiedlichen Lagerbelastungen keinen unmittelbaren Schluß auf die Standzeit des Lagers zu.

Obwohl alle Deckschichten, die sich zur Bildung einer Lauffläche eignen und einen entsprechenden Verschleiß über die Standzeit des Gleitlagers aufweisen, erfindungsgemäß eingesetzt werden können, ergeben sich besonders vorteilhafte Konstruktionsverhältnisse, wenn die Deckschicht aus einem Gleitlack besteht, dessen Verschleiß von der aufgetragenen Schichtdicke weitgehend unabhängig ist, so daß mit Hilfe eines solchen Gleitlackes eine Anpassung an sehr unterschiedliche Standzeiten möglich wird. Diese Gleitlacke können außerdem eine vom Lagermetall der Gleitschicht deutlich abgehobene Einfärbung aufweisen, was für die Beurteilung der Reststandzeit eines Gleitlagers von nicht unerheblicher Bedeutung ist. Gleitlacke auf Graphitbasis oder auf der Basis von Molybdänsulfid, die eine schwarze Einfärbung aufweisen, eignen sich für diesen Einsatz in besonders günstiger Weise.

### Kurze Beschreibung der Zeichnung

Anhand der Zeichnung wird die Erfindung näher beschrieben. Es zeigen:
- Fig. 1: die Abhängigkeit der Standzeit eines Zweistoff-Gleitlagers von der durchschnittlichen Belastung in einer Kennlinie, die die Anzahl der Lastwechsel bis zum Lagermetallbruch bei unterschiedlichen Belastungen veranschaulicht und
- Fig. 2: den Verschleiß einer Deckschicht aus einem Gleitlack auf der Basis von Molybdänsulfid anhand von Kennlinien, die die verschleißbedingte Dickenabnahme der Deckschicht über der Belastungszeit einer vorgegebenen Belastung wiedergeben.

### Weg zur Ausführung der Erfindung

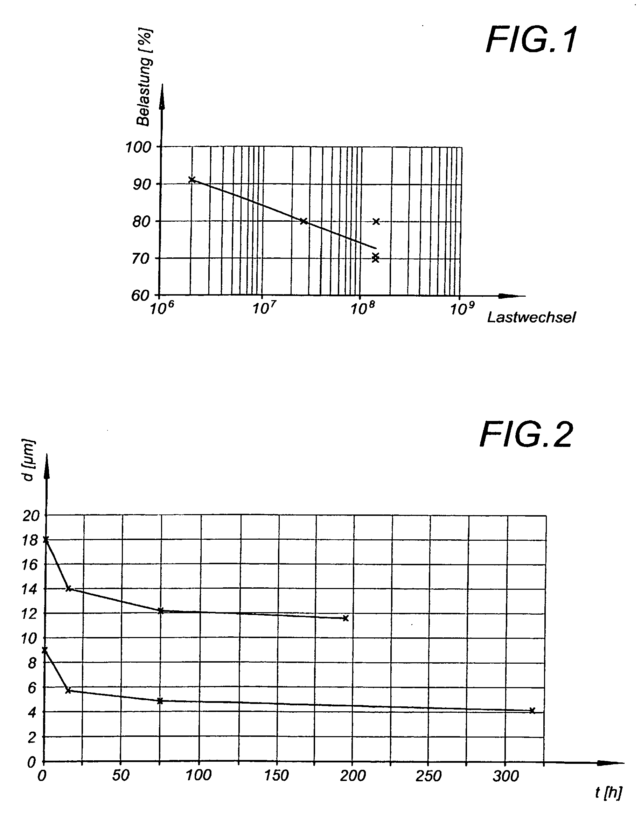

Um die Abhängigkeit der Standzeit eines Zweistofflagers von der durchschnittlichen Belastung zu zeigen, wurden entsprechende Versuche auf einer Lagerprüfmaschine unter erhöhten Belastungen zur Ergebnisermittlung unter verkürzten Zeitbedingungen durchgeführt. Wie der Fig. 1 entnommen werden kann, bei der auf der Ordinate die Lagerbelastung in Prozent der Maximalbelastung, und auf der Abszisse die Anzahl der Lastwechsel bis zum Auftritt eines Lagermetallbruches in einem logarithmischen Maßstab aufgetragen sind, nimmt die Standzeit der untersuchten Gleitlagerart mit einer stählernen Stützschale und einer Gleitschicht aus AISn20 als Lagermetall mit fallender Belastung zu und umfaßt beispielsweise bei einer Belastung von 75 % der Maximallast, 1,44 x 10⁸ Lastwechsel, was einer Standzeit von ca. 400 Stunden entspricht.

In der Fig. 2 ist auf der Ordinate die Dicke d eines Decklackes auf der Basis von Molybdänsulfid über der Belastungszeit t aufgetragen, die auf der Abszisse in Stunden h angegeben wurde, und zwar unter der Voraussetzung, daß die Belastung der Gleitlackschicht der der hinsichtlich ihrer Lebensdauer untersuchten Gleitlager entsprach, deren Untersuchungsergebnisse in der Fig. 1 zusammengefaßt sind. Bei einer dynamischen Lagerbelastung von 75 % der Maximallast kann für eine Belastungszeit von 190 h bei einer Ausgangsschichtdicke von 18 µm ein Verschleiß von circa 5 µm festgestellt werden. Bei einer Ausgangsschichtdicke von 9 µm ergibt sich nach 330 h ein Verschleiß von circa 4 µm. Der Verschleiß ist somit weitgehend unabhängig von der ursprünglichen Schichtdicke der Laufschicht, so daß anhand des Verschleißes die belastungsabhängige Lebensdauer des Gleitlagers ermittelt werden kann, und zwar nicht nur für unterschiedliche Dicken der Laufschicht, sondern auch für unterschiedliche Lagermetalle.

Wird daher für ein Gleitlager, wie es für die Darstellung nach der Fig. 1 untersucht wurde, eine Deckschicht in einer Dicke von 4 µm in Form eines Gleitlackes auf der Gleitschicht aus dem Lagermetall AISn20 aufgebracht, so zeigt das nach dem Verschleiß der Deckschicht freigelegte, gegenüber der Deckschicht eine andere Färbung aufweisende Lagermetall das bevorstehende Ende der Lebensdauer der Gleitschicht und damit den notwendigen Lagerwechsel an. Übliche Gleitlacke bestehen beispielsweise aus 80 Gew% Polyamidimid und 20 Gew% Polytetrafluoräthylen. Diese Gleitlacke weisen eine eierschalenbraune Färbung auf. Um bezüglich des Lagermetalls einen entsprechenden Kontrast zu erreichen, können 77 Gew% Polyamidimid mit 20 Gew% Polytetrafluoräthylen und 3 Gew% Chromoxid gemischt werden, was eine grüne Färbung der Deckschicht ergibt. Werden anstelle von Chromoxid 2 Gew% Molybdänsulfid in Verbindung mit 1 Gew% Graphit eingesetzt, so erhält man einen schwarzen Gleitlack, ohne die tribologischen Eigenschaften des Gleitlackes nachteilig zu beeinflussen.

## Patentansprüche

1. Gleitlager mit einer Stützschale und einer auf der Stützschale aufgebrachten Gleitschicht aus einem Lagermetall, **dadurch gekennzeichnet, daß** die Gleitschicht eine eine Laufschicht bildende Deckschicht trägt, deren Dicke dem während der durchschnittlichen Standzeit der Gleitschicht zu erwartenden Verschleiß der Deckschicht entspricht.

2. Gleitlager nach Anspruch 1, **dadurch gekennzeichnet, daß** sich die die Laufschicht bildende Deckschicht optisch von der Gleitschicht unterscheidet.

3. Gleitlager nach Anspruch 1 oder 2, **dadurch gekennzeichnet, daß** die Deckschicht aus einem Gleitlack besteht.

4. Gleitlager nach Anspruch 3, **dadurch gekennzeichnet, daß** die Deckschicht mit einem Gleitlack auf Graphitbasis abgedeckt ist.

5. Gleitlager nach Anspruch 3, **dadurch gekennzeichnet, daß** die Deckschicht mit einem Gleitlack auf der Basis von Molybdänsulfid abgedeckt ist.

## Claims

1. Slide bearing having a support shell and a slide layer which is applied to the support shell and consists of a bearing metal, **characterised in that** the slide layer supports a cover layer forming a running layer, the thickness of the cover layer corresponding to the wear of the cover layer which is to be expected during the average service life of the slide layer.

2. Slide bearing as claimed in Claim 1, **characterised in that** the cover layer forming the running layer differs optically from the slide layer.

3. Slide bearing as claimed in Claim 1 or 2, **characterised in that** the cover layer consists of a sliding lacquer.

4. Slide bearing as claimed in Claim 3, **characterised in that** the cover layer is covered with a graphite-based sliding lacquer.

5. Slide bearing as claimed in Claim 3, **characterised in that** the cover layer is covered with a molybdenum sulphide-based sliding lacquer.

## Revendications

1. Palier à glissement, avec une coque d'appui et une couche de glissement, appliquée sur la coque d'appui et composée d'un métal pour palier, **caractérisé en ce que** la couche de glissement porte une couche de couverture formant une couche de frottement, dont l'épaisseur correspond à l'usure escomptée de la couche de couverture pendant la durée de vie moyenne de la couche de glissement.

2. Palier à glissement selon la revendication 1, **caractérisé en ce que** la couche de couverture formant la couche de frottement se distingue optiquement de la couche de glissement.

3. Palier à glissement selon la revendication 1 ou 2, **caractérisé en ce que** la couche de couverture est composée d'un vernis de glissement.

4. Palier à glissement selon la revendication 3, **caractérisé en ce que** la couche de couverture est couverte d'un vernis de glissement à base de graphite.

5. Palier à glissement selon la revendication 3, **caractérisé en ce que** la couche de couverture est couverte d'un vernis de glissement à base de sulfure de molybdène.
